# FASCICULE DE BREVET EUROPEEN

(11) **EP 0 755 181 B1**
(45) Date de publication et mention de la délivrance du brevet: **19.08.1998**
(21) Numéro de dépôt: 95917397.2
(22) Date de dépôt: 13.04.1995
(51) Int. Cl.: A01F 29/00

(54) **DISPOSITIF DE DEMELAGE ET DECHIQUETAGE DE PRODUITS POUR L'ALIMENTATION DU BETAIL**
VORRICHTUNG UM FUTTER ZU HÄCKSELN UND ZU ZERREISSEN
DEVICE FOR LOOSENING AND SHREDDING CATTLE FEED MATERIALS

(30) Priorité: 15.04.1994 FR 9404753; 25.11.1994 FR 9414334; 25.11.1994 FR 9414335
(43) Date de publication de la demande: 29.01.1997
(73) Titulaire: LUCAS G. S.A., F-85130 La Verrie (FR)
(72) Inventeur: LUCAS, Gérard, F-85130 La Verrie (FR); RETAILLEAU, Jean-Claude, F-85130 La Verrie (FR)
(74) Mandataire: Michelet, Alain
(86) Numéro de dépôt international: FR9500488
(87) Numéro de publication internationale: WO9528077

(56) Documents cités:
- EP-A- 0 384 791
- DE-B- 1 088 280
- DE-C- 877 070
- DE-C- 887 126
- FR-A- 2 679 152
- US-A- 2 889 862

## Description

La présente invention concerne un dispositif de démêlage et de déchiquetage de produits destinés à l'alimentation du bétail ou à la constitution de leur litière, et, plus particulièrement, de produits du genre fourrage conditionnés en balles ou en vrac.

Ce dispositif fait partie des machines de distribution du genre de celles décrites dans le document EP-A-0 384 791 notamment.

Ces machines sont constituées d'une benne dont le fond Comporte un tapis mobile du type convoyeur à barrettes sur lequel est posée la balle. Ce convoyeur achemine la balle vers un dispositif démêleur, déchiqueteur, qui comprend un ou plusieurs rotors formant un front d'attaque. Ces rotors sont munis de moyens pour fragmenter la balle en découpant et/ou déchiquetant le produit et de moyens pour propulser ce produit vers un ventilateur qui est situé derrière le ou les rotors, c'est-à-dire à la partie avant de la benne. Ce ventilateur permet de distribuer les produits s'il s'agit de fourrage ou de les projeter à grande distance, s'il s'agit de produits pour réaliser le paillage.

Pour réaliser une distribution régulière, le ventilateur doit être alimenté de façon régulière également. Le contrôle du débit d'alimentation du ventilateur peut s'effectuer au moyen d'un dispositif du genre herse, ou peigne, disposé au-dessus du dispositif démêleur et en particulier au-dessus du rotor supérieur, comme décrit dans le document précité.

Les dents de la herse forment une sorte de barrière qui laisse passer des fragments découpés par le rotor et recycle les paquets trop importants en les renvoyant dans la benne.

Le dispositif selon l'invention permet de mieux contrôler l'alimentation du ventilateur pour éviter, voire supprimer, l'arrivée de paquets de produits qui provoquent des à-coups et nuisent à la régularité de la distribution.

Le dispositif selon l'invention défini par les caractéristiques de la revendication 1 comprend un rotor muni d'au moins un disque disposé radialement, dont la périphérie est lisse et coopère selon un jeu réduit, avec une dent de la herse, placée dans le même plan que le disque, pour former un front de retenue et éviter les phénomènes de bourrage.

Selon une autre disposition de l'invention, pour améliorer l'efficacité des disques lisses, les dents coopérant avec ces disques, ont une épaisseur légèrement supérieure à celle des disques et elles comportent, latéralement, des couteaux ou sections qui enserrent les disques lisses.

Toujours selon l'invention, le rotor comporte des disques de découpe, et le diamètre du ou des disques lisses est compris entre le diamètre du tambour constituant ledit rotor et le diamètre des disques de découpe, de façon à établir une sorte de profondeur de passe des disques de découpe.

Selon une autre disposition de l'invention, le dispositif comporte au moins deux rangées de dents:
- une première rangée coopérant avec le ou les disques lisses, disposée en amont du plan vertical passant par l'axe du rotor portant les disques ;
- une deuxième rangée de dents, coopérant avec la périphérie des disques de découpe, laquelle deuxième rangée est disposée en aval dudit plan vertical.

Toujours selon l'invention, les dents de chacune des rangées sont décalées les unes par rapport aux autres, disposées en quinconce.

Selon une autre disposition de l'invention, le rotor comporte plusieurs disques lisses dont l'écartement est de l'ordre de 400 à 650 mm, lesquels disques sont disposés de façon symétrique par rapport au plan radial médian dudit rotor. Cet écartement est du même ordre que le diamètre du rotor.

Toujours selon l'invention, la pointe des dents du premier rang se situe en amont du plan vertical passant par l'axe du rotor, dans une plage comprise entre ce plan jusqu'à environ les 3/4 du rayon des disques lisses. Cette position de la pointe des dents dépend de la forme de ces dernières.

Selon une autre disposition de l'invention, les dents du premier rang forment un front qui s'étend en hauteur sur une distance qui correspond sensiblement au diamètre du rotor et elles peuvent comporter, partant de la pointe, une première portion inclinée vers le haut et vers l' amont, c est-à-dire vers l'entrée de la benne, suivie d'une portion qui s'étend sur la moitié de la hauteur, inclinée vers le haut et vers l' aval selon un angle de l'ordre de 10°.

Selon une autre disposition de l'invention, les pointes des dents du deuxième rang se situent à une distance du plan vertical passant par l'axe du rotor, de l'ordre de la moitié aux 3/4 du rayon de l'enveloppe dudit rotor, lesquelles dents ont une face frontale qui est sensiblement parallèle audit plan vertical.

Toujours selon l'invention, les deux rangées de dents sont montées sur une même poutre support qui est située d'une part, en aval du plan vertical passant par l'axe du rotor et, d'autre part, devant le ventilateur d'éjection ; l' espace entre cette poutre et la périphérie dudit rotor correspondant sensiblement à l'espace entre ladite périphérie du rotor et ledit ventilateur.

Toujours selon l'invention, le rotor comprend, en plus des disques lisses, des disques de découpe dont la périphérie comporte des portions lisses entre deux dents, lesquelles dents sont conformées en périphérie et/ou rapportées sous forme de sections.

Selon une possibilité de l'invention, les dents sont au nombre de 15 à 25, conformées en périphérie du disque, avec une hauteur de 15 à 25 mm, lesquelles dents ne couvrent que la moitié environ de ladite périphérie, le reste étant lisse et circulaire. Ces disques dentés peuvent comporter aussi quelques sections, de 3 à 5 par exemple.

Selon une autre possibilité de l'invention, la périphérie du disque est lisse et comporte 3 à 20 sections dont l'angle d'attaque est négatif de l'ordre de 45 à 80°.

Toujours selon l'invention, le rotor comporte entre cinq et douze disques de découpe, disposés dans des plans perpendiculaires à l'axe dudit rotor, régulièrement espacés et, entre ces disques, des couteaux palettes ou dents de propulsion disposées radialement, dont le nombre est de 3 à 20, régulièrement réparties sur la périphérie du tambour entre les disques.

Toujours selon l'invention, les palettes peuvent comporter des dents dont la hauteur est contenue entre l'enveloppe externe des dents ou des sections des disques de découpe, et le diamètre des disques lisses.

Toujours selon l'invention, les palettes sont inclinées longitudinalement par rapport au plan passant par l'axe du rotor d un angle compris entre 0 et 30°, lesquelles palettes sont de préférence disposées en hélices de part et d'autre du plan radial médian dudit rotor et les dents de deux palettes consécutives situées entre deux disques, sont décalées les unes par rapport aux autres de façon à balayer un maximum de la surface frontale de la balle.

Selon une variante le rotor comprend en plus des disques lisses, des disques de découpe parallèles entre eux mais inclinés par rapport à l'axe dudit rotor, lesquels disques ont un contour périphérique elliptique et sont contenus dans une enveloppe cylindrique centrée sur ledit axe certains d'entre eux comportant une discontinuité au niveau des disques lisses pour permettre le passage des dents de la première rangée qui coopère avec ces disques lisses, et éventuellement, des sections disposées latéralement sur lesdites dents.

Toujours selon l'invention les disques de découpe inclinés se chevauchent d'une valeur de l'ordre de 15 à 25 mm et leur angle d'inclinaison par rapport à l'axe du rotor est de l'ordre de 70 à 80°.

Selon une autre disposition de l'invention, le dispositif comporte au-dessus de la partie supérieure des dents du premier rang qui coopère avec les disques lisses un déflecteur qui canalise les produits retenus par lesdites dents pour le recyclage, lequel déflecteur est rigide ou en forme de capote constituée d'une toile tendue sur des arceaux, lesquels arceaux sont articulés et éventuellement mobiles sous l'effet d'un vérin de manoeuvre par exemple.

L'invention sera encore détaillée à l'aide de la description suivante et des dessins annexés, donnés à titre indicatif, et dans lesquels :
- la figure 1 représente, de façon schématique en coupe longitudinale, une portion d'une machine de distribution de produits du genre fourrage ou paille destinés à l'alimentation du bétail ou à la constitution de litière :
- la figure 2 représente une variante de la figure 1 ;
- la figure 3 est une vue schématique depuis l'arrière de la benne avec deux demi-rotors ;
- la figure 4 est une vue de côté du rotor montrant, de façon partielle, les disques lisses, les disques de découpe et les palettes de propulsion ;
- la figure 5 est une vue de côté du rotor du type à disques de découpe inclinés, montrant les disques lisses et les disques de découpe ;
- la figure 6 représente le détail du montage de sections sur les dents qui coopèrent avec les disques lisses du rotor ;
- la figure 7 est une vue de face de la figure 4, montrant, en plus, des palettes d'éjection du produit, lesquel les palettes sont disposées entre les disques de découpe et le disque lisse.

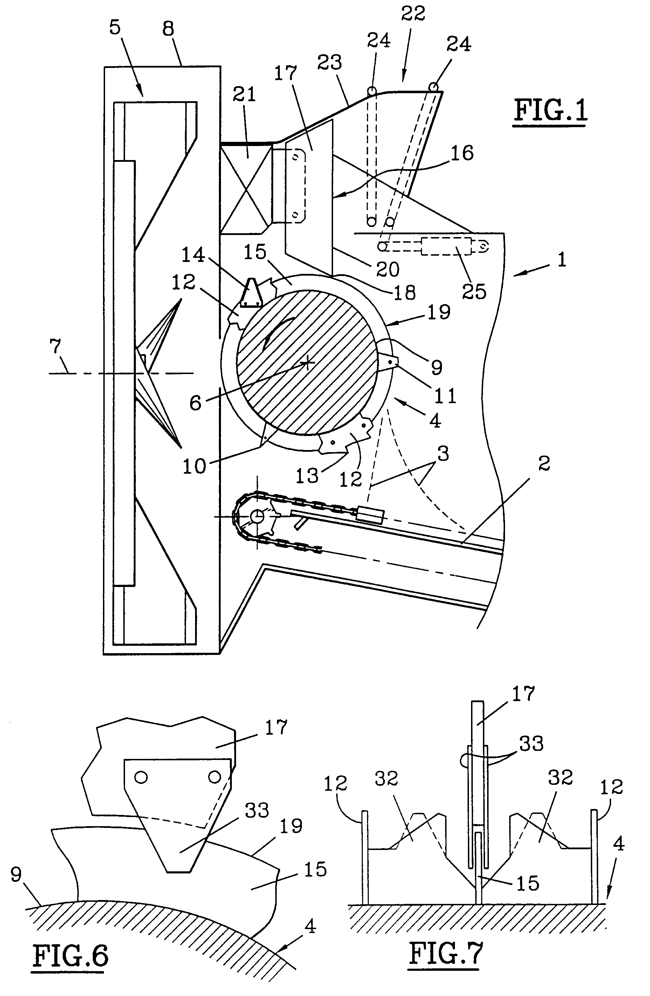

Selon la représentation partielle de la figure 1, la machine est constituée d'une benne 1 dont le fond est équipé d'un système convoyeur 2 du type tapis à barrettes. Ce convoyeur permet de faire avancer une balle 3, cylindrique ou parallélépipédique, vers un rotor 4 chargé de fragmenter, démêler et/ou déchiqueter ladite balle. Les fragments sont propulsés par le rotor vers un ventilateur 5 disposé à la partie avant de la benne. Le rotor 4 tourne autour d'un axe 6 horizontal perpendiculaire au sens d'avancement des balles 3. Le ventilateur 5 tourne autour d'un axe 7 horizontal et perpendiculaire à l'axe 6 du rotor 4.

Le ventilateur 5 est disposé dans une volute 8, située à l'avant de la benne 1, et il permet l'éjection des produits fragmentés pour réaliser soit l'alimentation du bétail s'il s'agit de fourrage, soit le paillage.

Ce type de machine suivant sa capacité peut comporter comme décrit dans le document précité, un ou plusieurs rotors 4 disposés l'un audessus de l'autre, devant le ventilateur 5, tournant tous dans le même sens, c'est-à-dire dans le sens inverse des aiguilles d'une montre comme représenté figure 1. Dans l'exemple de réalisation la machine comporte un seul rotor 4 dont l'axe 6 se situe légèrement au-dessus de l'axe 7 du ventilateur 5.

Le rotor 4 comprend un tambour cylindrique 9 dont le diamètre est choisi de façon à offrir une circonférence dont la longueur est supérieure à la longueur maximale des fibres du produit mis en balles. Cette particularité permet d'éviter les risques d'enroulement des fibres autour du tambour. Son diamètre est par exemple de l'ordre de 400 à 450 mm.

Ce tambour 9 est muni de moyens appropriés pour fragmenter les balles 3 c'est-à-dire pour démêler, déchiqueter, en réalisant une sorte d'usinage des balles 3. Ces moyens, illustrés figure 1, peuvent être constitués de dents pointues 10 de couteaux 11. Ces dents 10 ou ces couteaux 11 sont régulièrement répartis sur le tambour 9, soudés sur sa périphérie.

On peut également utiliser des disques de découpe 12, tels que représentés partiellement figure 1. Ces disques 12 peuvent comporter, taillées sur leur périphérie, des dents 13 ; ils peuvent aussi comporter, assemblés par tout moyen approprié des couteaux ou sections 14.

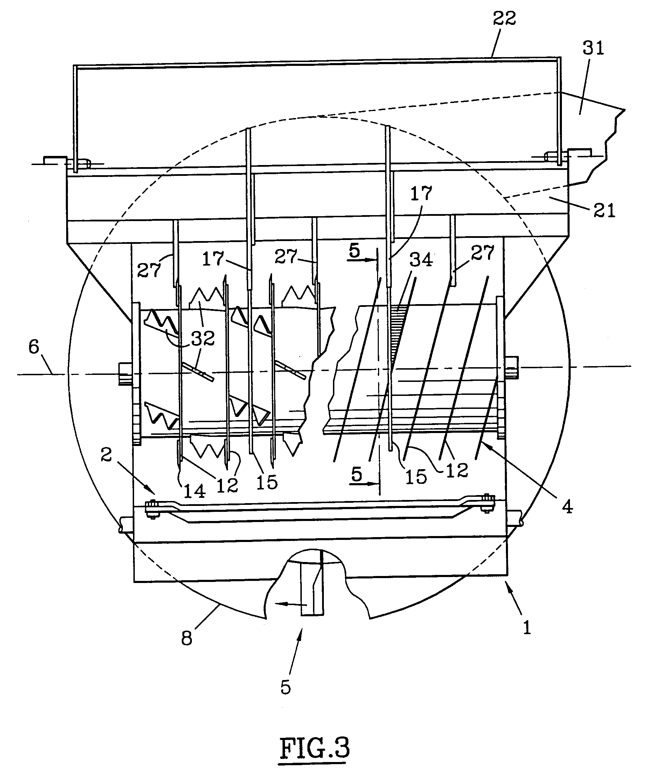

Les disques 12 seront détaillés plus loin en liaison avec les figures 3, 4 et 5.

Pour pouvoir réaliser un véritable usinage des balles, le rotor comporte des moyens qui permettent d'établir une profondeur de passe, indépendamment de celle qui est donnée par le mouvement du convoyeur 2. Le rotor 4 comporte pour accroître la précision de l'usinage, des disques lisses 15 disposés dans un plan perpendiculaire à son axe 6. Il comporte au moins un disque lisse 15 et de préférence au moins deux. Ces disques sont espacés d'une distance de l'ordre de 400 à 650 mm environ, c'est-à-dire d'une distance qui correspond sensiblement au diamètre du rotor.

Le diamètre de ces disques lisses est inférieur au diamètre de l'enveloppe des différents systèmes de découpe détaillés précédemment, c'est-à-dire des dents 10 ou couteaux 11 ou encore des dents 13 ou sections 14 des disques de découpe 12, et il est supérieur au diamètre du tambour 9.

Ces disques lisses 15 se présentent en fait sous la forme d'une couronne de faible épaisseur, soudée sur le tambour 9, tout comme les disques de découpe 12. Ils sont réalisés en tôle avec une épaisseur de 3 à 10 mm par exemple.

Les disques lisses 15 coopèrent avec une barrière 16 disposée transversalement au-dessus du rotor 4. Cette barrière ou herse comporte, situées dans le même plan que chaque disque lisse 15, des dents 17 dont la pointe 18 effleure la périphérie 19 du disque lisse 15 correspondant.

Cette barrière 16 a pour rôle de retenir les paquets trop importants de produits issus de la balle 3, et de les recycler dans la benne.

La pointe 18 de la dent 17 et la partie frontale 20 de cette dent se situent en avant du plan vertical qui passe par l'axe 6 du rotor 4 ; cette pointe peut se situer dans une plage ou une zone qui va dudit plan vertical jusqu'à environ les 3/4 du rayon de ces disques lisses 15.

Cette distance peut varier par simple changement des dents 17.

Ces dents 17 sont fixées par tout moyen approprié sur une poutre 21 disposée transversalement au-dessus du rotor 4, derrière le plan vertical passant par l'axe 6 de ce dernier, et devant l'entrée du ventilateur 5.

L'espace entre la poutre 21 et le rotor 4 correspond sensiblement à l'espace entre le ventilateur 5 et ledit rotor.

On remarque encore, figure 1, un déflecteur 22 disposé à la partie supérieure de la benne 1, pour canaliser et guider les produits recyclés.

Ce déflecteur 22 est en forme de capote ; elle est constituée d'une toile 23 tendue au moyen d'arceaux 24 qui sont articulés sur les flancs de la benne 1, et elle est fixée sur la poutre 21 par exemple.

Cette capote 22 peut être repliée au moyen d'un vérin 25 qui agit sur le dernier arceau 24 par exemple.

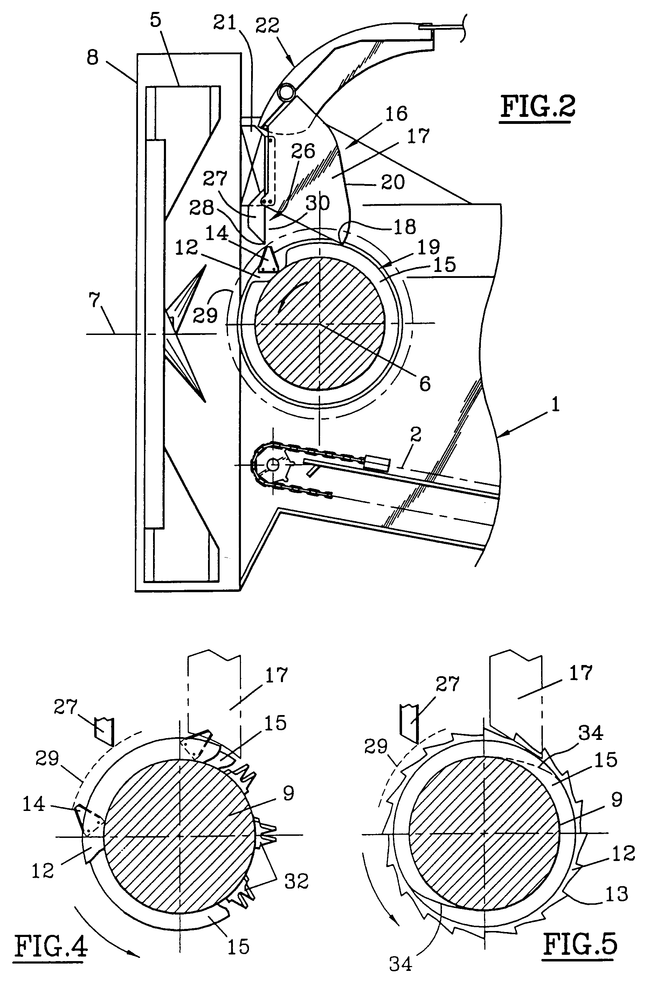

La figure 2 représente de façon partielle, une machine munie d'un double système de barrière. On retrouve la première barrière 16 constituée de dents 17. Cette première barrière est complétée par une seconde barrière 26 constituée de dents 27 disposées en aval des dents 17 de ladite première barrière 16.

La pointe 28 des dents 27 coopère avec un minimum de jeu avec l'enveloppe périphérique 29 des disques de découpe 12 et en particulier des dents 13 et des sections 14 de ces disques.

La face frontale 30 des dents 27 est disposée derrière le plan vertical passant par l'axe 6 du rotor 4 à une distance qui est de l'ordre de la moitié aux 3/4 du rayon de l'enveloppe 29. La face frontale 30 des dents 27 est sensiblement parallèle au plan vertical passant par l'axe 6 du rotor.

Les dents 17 et 27 constituant les barrières 16 et 26, sont solidaires de la même poutre transversale 21. Ces dents sont fixées par tout moyen approprié, soudage ou boulonnage. Elles sont disposées en quinconce et, à titre d'exemple, comme représenté figure 3, on trouve deux dents 17 à l'avant et trois dents 27 à l'arrière.

On remarque, figure 2, que la face frontale 20 des dents 17 s'étend sur une hauteur qui correspond sensiblement au diamètre du rotor ; ce front comporte, partant de la pointe 18, une première portion inclinée vers le haut et vers l' amont c'est-à-dire vers l'entrée de la benne, suivie d'une portion qui s'étend sur la moitié de la hauteur inclinée vers le haut et vers l'aval selon un angle de l'ordre de 10°. Ces dents 17 s'étendent jusqu'au niveau du déflecteur 22. Ce déflecteur 22 est dans l'exemple de réalisation de la figure 2, constitué d'une tôle conformée en arc de cercle.

La figure 3 correspond à une vue depuis l'arrière de la benne, montrant le dispositif de démêlage et de déchiquetage.

On retrouve la benne 1 munie, à sa partie inférieure, du convoyeur 2. On remarque également la volute 8 dans laquelle tourne le ventilateur 5. Ce ventilateur 5 éjecte les produits au moyen d'une goulotte 31 disposée à la partie supérieure de la machine.

Le dispositif de démêlage et de déchiquetage comprend le rotor 4 représenté figure 3, par moitié sel on deux modes de réalisation.

Ce rotor 4 coopère avec les deux systèmes de barrière ou herse 16 et 26 dont il a été question précédemment en relation avec la figure 2.

Les dents 17 constituant la première barrière, coopèrent avec les disques lisses 15 disposés sur le tambour 9 du rotor 4. Dans l'exemple représenté figure 3, les deux disques lisses sont disposés de part et d'autre du plan vertical médian du rotor 4, écartés l'un de l'autre d'une distance de l'ordre de 400 à 650 mm. Ces deux disques 15 divisent le rotor 4 en trois zones. Ces trois zones sont chacune divisées en deux par les dents 27 constituant la seconde barrière 26. Ces dents 27 coopèrent avec la périphérie des disques de découpe.

Les dents 17 et 27 sont assemblées sur la poutre transversale 21 située à la partie supérieure de la benne 1, en-dessous du déflecteur 22.

La première barrière 16 impose un recyclage des paquets de produits trop importants.

La seconde barrière 26 retient les paquets qui ont pu passer le stade de la première barrière 16, le temps de les déchiqueter avec l'aide des disques de découpe et de les expédier dans le ventilateur 5.

Le rotor 4 peut comporter, comme représenté figure 3, des disques de découpe 12 disposés dans un plan perpendiculaire à l'axe 6 ou dans des plans parallèles entre eux mais inclinés par rapport audit axe 6.

Ces disques de découpe 12 peuvent comporter, comme représenté figure 1, des dents 13 ou des sections 14, ou les deux.

Lorsque les disques de découpe sont disposés dans des plans perpendiculaires à l'axe 6 du rotor, l'espace entre deux disques peut comporter des couteaux, dents ou des palettes 32 comme représenté figure 3 pour entraîner les produits découpés. Ces palettes s'étendent radialement. Elles peuvent être légèrement inclinées par rapport à l'axe 6 selon un angle compris entre 0 et 25° par exemple.

Ces palettes 32 sont en forme de plaques de tôle découpées, soudées sur le tambour 9.

Elles ont de préférence une largeur qui est inférieure à l'espace entre deux disques de sorte que deux palettes consécutives sont décalées l'une par rapport à l'autre pour balayer une surface maximale avec leur pointe.

Ces palettes 32 sont par exemple au nombre de quatre entre deux disques de découpe. Toutefois ce nombre peut être plus important selon la nature des produits, de 3 à 12 par exemple.

Les disques de découpe inclinés assurent simultanément la découpe et la propulsion des produits vers le ventilateur.

L'inclinaison entre le plan des disques de découpe et le plan des disques lisses est de l'ordre de 10 à 20°. L'espacement entre deux disques de découpe est tel que les disques se chevauchent de 15 à 25 mm par exemple.

Tous ces disques de découpe 12 sont découpés dans de la tôle. Ils ont de préférence une épaisseur de l'ordre de 4 mm.

Les disques de découpe inclinés se présentent en fait sous la forme de couronnes qui comportent un contour intérieur et extérieur elliptique de sorte que, après montage sur le tambour 9 du rotor 4, l'enveloppe externe de ces disques forme un cylindre centré sur l'axe 6 dudit rotor ce qui permet au rotor de tourner rond par rapport à la balle à déchiqueter.

La figure 5 représente le rotor vu de côté. On remarque le tambour 9 et un disque de découpe 12 en forme de couronne munie à sa périphérie d'une multitude de dents 13 chargées de découper les fibres de la balle et de les agripper pour les éjecter vers le ventilateur.

Le nombre de dents 13 est de préférence choisi entre 15 et 25. Ces dents ont une hauteur de 15 à 25 mm environ et elles ont un angle d'attaque négatif de l'ordre de 10 à 15° en ayant de plus la possibilité d'être dévoyées.

L'espace entre deux dents comporte sur une moitié du pas, une portion lisse circulaire qui permet de limiter la profondeur de passe et de maintenir la balle à distance du tambour 9.

Les disques de découpe 12 peuvent également comporter comme représenté figure 4, des sections tranchantes 14 qui sont fixées au moyen de boulons par exemple pour être plus facilement changées.

Le nombre de ces sections peut varier entre 3 et 20 et l'angle d attaque est négatif, de l'ordre de 45 à 80°.

La périphérie de ces disques de découpe 12 munie de sections 14 est lisse et constitue là aussi un moyen de retenue des balles pour éviter leur contact avec le tambour 9 du rotor.

Le nombre des disques de découpe peut varier en fonction des matériaux. Il est de l'ordre de 3 à 12. L'espace entre deux disques est compris entre 100 et 500 mm par exemple.

Les sections 14 peuvent être montées également sur les disques munis de dents 13, de façon complémentaire.

La figure 6 représente un aménagement des dents 17, au niveau de leur pointe 18. Cet aménagement consiste en un positionnement d'une paire de sections 33, de part et d'autre de la dent 17. Les sections 33 chevauchent, sur une partie de sa hauteur, le disque lisse 15 et l enserrent pour accroître l'efficacité de la barrière, c'est-à-dire éviter tout passage de fibres longues en amont du rotor 4.

Ces sections 33 sont par exemple boulonnées à l'extrémité inférieure des dents 17.

La figure 7 représente vue de face une dent 17 disposée au-dessus d'un disque lisse 15. Cette dent 17 comporte latéralement des sections 33 qui effleurent les côtés du disque lisse 15. Le disque 15 a une épaisseur inférieure à celle de la dent 17 pour laisser un léger jeu entre les sections 33 et les flancs du disque 15.

On remarque également, figure 5, les disques de découpe 12 et entre ces disques de découpe et le disque lisse 15, des palettes 32 chargées de propulser les produits vers le ventilateur.

Ces palettes sont aménagées pour permettre le passage des sections 33 et on remarque que des palettes consécutives comportent des dents légèrement décalées les unes par rapport aux autres pour balayer une surface maximale sur la balle à déchiqueter.

Dans le cas des disques de découpe inclinés. le croisement d'un disque incliné avec un disque lisse comporte une sorte de tôle déflectrice 34 qui peut s'étendre sur par exemple un quart de la circonférence afin d'éviter une accumulation de matériaux dans l'espace en forme de coin entre les deux disques. Cette tôle déflectrice apparaît figure 3 et figure 5.

## Revendications

1. Dispositif de démêlage, déchiquetage, de produits du genre fourrage conditionnés en balles, comprenant d'une part au moins un rotor (4) muni d'organes (14) pour découper ladite balle et propulser les fragments vers un ventilateur d'éjection et de distribution (5) et, d'autre part, des organes en forme de herse (16) ou barrière munie de dents (17), chargés de retenir ladite balle et/ou de recycler les produits, caractérisé en ce que ledit rotor comporte, en plus desdits organes de découpe, au moins un disque (15) disposé radialement, dont la périphérie (19) est lisse et coopère avec une dent (17) de ladite herse ou barrière, laquelle dent est placée dans le même plan que le disque pour - former avec ce dernier, un front de retenue, - éviter les phénomènes de bourrage et - recycler les paquets de produits.

2. Dispositif de démêlage et de déchiquetage selon la revendication 1, caractérisé en ce que le rotor (4) comporte des organes de découpe en forme de disques (12) et des disques lisses (15), lesquels disques lisses ont un diamètre compris entre le diamètre du tambour constituant ledit rotor et le diamètre desdits disques de découpe.

3. Dispositif de démêlage et de déchiquetage selon l'une quelconque des revendications 1 ou 2, caractérisé en ce qu'il comporte au moins deux rangées de dents ou barrières :
- une première rangée (16) coopérant avec le ou les disques lisses (15), disposée en amont du plan vertical passant par l'axe (6) du rotor (4) portant les disques (15) ;
- une deuxième rangée (26) coopérant avec la périphérie des disques de découpe (12), laquelle deuxième rangée est disposée en aval dudit plan vertical.

4. Dispositif de démêlage et de déchiquetage selon la revendication 3, caractérisé en ce que les dents (17) du premier rang (16), coopérant avec les disques lisses (15), ont une épaisseur sensiblement supérieure à celle des disques et comportent latéralement, des couteaux ou sections (33) qui enserrent les disques lisses.

5. Dispositif de démêlage et de déchiquetage selon la revendication 4, caractérisé en ce que les dents (17 et 27) de chacune des rangées (16 et 26) respectivement sont décalées les unes par rapport aux autres, disposées en quinconce.

6. Dispositif de démêlage et de déchiquetage selon l'une quelconque des revendications 1 à 5, caractérise en ce que le rotor (4) comporte plusieurs disques lisses (15) dont l'écartement est de l'ordre de 400 à 650 mm, lesquels disques sont disposés de façon symétrique par rapport au plan radial médian dudit rotor.

7. Dispositif de démêlage et de déchiquetage selon la revendication 5, caractérisé en ce que la pointe des dents (17) du premier rang (16) se situe en amont du plan vertical passant par l'axe (6) du rotor (4), dans une plage qui part de ce plan jusqu'à environ les 3/4 du rayon du disque lisse (15).

8. Dispositif de démêlage et de déchiquetage selon la revendication 4, caractérisé en ce que les dents (17) du premier rang (16) forment un front qui s'étend en hauteur sur une distance qui correspond sensiblement au diamètre du rotor (4), lesquelles dents comportent partant de leur pointe (18), une première portion inclinée vers le haut et vers l'amont, c'est-à-dire vers l'entrée de la benne, suivie d'une portion qui s'étend sur la moitié de leur hauteur, inclinée vers le haut et vers l'aval, selon un angle de l'ordre de 10°.

9. Dispositif de démêlage et de déchiquetage selon la revendication 4, caractérisé en ce que les pointes (28) des dents (27) du deuxième rang (26), disposées en aval du plan vertical passant par l'axe (6) du rotor (4), se situent à une distance de ce plan comprise entre la moitié et les 3/4 du rayon de l'enveloppe (29) dudit rotor, lesquelles dents ont une face frontale (30) qui est sensiblement parallèle audit plan vertical.

10. Dispositif de démêlage et de déchiquetage selon l'une quelconque des revendications 4 à 9, caractérise en ce que les deux rangées (16 et 26) de dents sont montées sur une même poutre support (21) qui est située transversalement en aval du plan vertical passant par l'axe (6) du rotor, devant le ventilateur d'éjection (5) ; l'espace entre cette poutre (21) et la périphérie dudit rotor correspond sensiblement à l'espace entre ladite périphérie du rotor et ledit ventilateur.

11. Dispositif de démêlage et de déchiquetage selon l'une quelconque des revendications 1 à 10, caractérise en ce que le rotor (4) comprend, en plus des disques lisses (15), des disques de découpe (12) dont la périphérie comporte des portions lisses entre deux dents, lesquelles dents sont conformées en périphérie et/ou rapportées sous forme de sections.

12. Dispositif de démêlage et de déchiquetage selon la revendication 11, caractérisé en ce que les disques de découpe (12) comportent des dents (13) dont le nombre est de 15 à 25 avec une hauteur de 15 à 25 mm au-delà de la périphérie du disque, lesquelles dents (13) ne couvrent que la moitié environ de ladite périphérie, le reste étant lisse et circulaire.

13. Dispositif de démêlage et de déchiquetage selon la revendication 11, caractérisé en ce que la périphérie des disques de découpe est lisse et comporte 3 à 20 sections dont l'angle d'attaque est négatif de l'ordre de 45 à 80°.

14. Dispositif de démêlage et de déchiquetage selon la revendication 11, caractérisé en ce que le rotor comporte de 3 à 12 disques de découpe (12), disposés dans des plans perpendiculaires à l'axe (6) dudit rotor, régulièrement espacés et comporte des couteaux, dents ou palettes de propulsion disposés radialement, dont le nombre est de 3 à 20, régulièrement répartis sur la périphérie du tambour entre les disques.

15. Dispositif de démêlage et de déchiquetage selon la revendication 14, caractérisé en ce que les palettes comportent des dents dont la hauteur est contenue entre l'enveloppe externe des disques de découpe et le diamètre des disques lisses (15).

16. Dispositif de démêlage et de déchiquetage selon l'une quelconque des revendications 14 ou 15, caractérise en ce que les palettes sont inclinées longitudinalement par rapport à l'axe du rotor (4), d'un angle compris entre 0 et 30°, lesquelles palettes sont de préférence disposées en hélice de part et d'autre du plan radial médian dudit rotor et les dents de deux palettes consécutives, situées entre deux disques, sont décalées les unes par rapport aux autres, de façon à balayer un maximum de la surface frontale de la balle.

17. Dispositif de démêlage et de déchiquetage selon l'une quelconque des revendications 1 à 10, caractérisé en ce que le rotor comprend, en plus des disques lisses, des disques de découpe (12) parallèles entre eux mais inclinés par rapport à l'axe dudit rotor, lesquels disques ont un contour périphérique elliptique et sont contenus dans une enveloppe cylindrique centrée sur ledit axe (6).

18. Dispositif de démêlage et de déchiquetage selon la revendication 17, caractérisé en ce que les disques de découpe inclinés se chevauchent d'une valeur de l'ordre de 15 à 25 mm.

19. Dispositif de démêlage et de déchiquetage selon l'une quelconque des revendications 1 à 18, caractérise en ce qu'il comporte, au-dessus de la partie supérieure des dents du premier rang (16), un déflecteur (22) qui canalise les produits retenus par lesdites dents pour les recycler, lequel déflecteur est en forme de tôle ou de capote constituée d'une toile (23) tendue sur des arceaux (24).

## Claims

1. A loosening, shredding device for products of the provender type, conditioned in bales, comprising at least one rotor (4) on the one hand, fitted with means (14) for cutting said bale and propel the fragments to an ejection and distribution fan (5), and, on the other hand, means in the form of harrow (16) or barrier fitted with teeth (17), whose purpose it is to retain said bale and/or to recycle the products, characterized in that said rotor contains in addition of said cutting means, at least one disc (15) arranged radially, whose periphery (19) is smooth and cooperates with a tooth (17) of said harrow (16) or barrier, said tooth is located on the same plane as the disc in order to - form with the last, a retaining front, - avoid the clogging phenomena and - recycle the product packets.

2. A loosening and shredding device according to claim 1, characterized in that the rotor (4) contains cutting discs (12) as well as smooth discs (15), whereas the diameter of those smooth discs ranges between the diameter of the drum constituting said rotor and the diameter of the cutting discs.

3. A loosening and shredding device according to any one of the claims 1 or 2, characterized in that it contains at least two rows of teeth or barriers :
- a first row (16) cooperating with the smooth disc(s) (15), arranged upstream of the vertical plane passing through the axis (6) of the rotor (4) carrying the discs (15) ;
- a second row (26), cooperating with the periphery of the cutting discs (12), which said second row is arranged downstream of said vertical plane.

4. A loosening and shredding device according to claim 3, characterized in that the teeth (17) of the first row (16), co-operating with the smooth discs (15) are significantly thicker that the discs and contain, laterally, knives or sections (33) surrounding the smooth discs.

5. A loosening and shredding device according to claim 4, characterized in that the teeth (17 and 27) of each row (16 and 26) respectively are offset with respect to one another, being arranged in staggered rows.

6. A loosening and shredding device according to any one of the claims 1 to 5, characterized in that the rotor (4) comprises several smooth discs (15) whose spacing ranges from about 400 to 650 mm, which discs are arranged symmetrically with respect to the middle radial plane of said rotor.

7. A loosening and shredding device according to claim 5, characterized in that the tip of the teeth (17) of the first row (16) is located upstream of the vertical plane passing through the axis (6) of the rotor (4), on a range starting from this plane up to approximately ¾ of the radius of the smooth disc (15).

8. A loosening and shredding device according to claim 4, characterized in that the teeth (17) of the first row (16) form a front stretching in height over a distance corresponding substantially to the diameter of the rotor (4), which teeth contain starting from their tips (18), a first section tilted upwards and upstream, i.e. towards the inlet of the skip, followed by a section stretching over the half of their height, tilted upwards and downstream, at an angle in the order of 10°.

9. A loosening and shredding device according to claim 4, characterized in that the tips (28) of the teeth (27) of the second row (26), located downstream of the vertical plane passing through the axis (6) of the rotor (4), are placed at a distance from this plane which is in the order of from the half to the ¾ of the radius of the envelope (29) of said rotor, which teeth exhibit a front surface (30) substantially parallel to said vertical plane.

10. A loosening and shredding device according to any one of claims 4 to 9, characterised in that both rows (16 and 26) of teeth are mounted on the same supporting beam (21) which is located transversally downstream of the vertical plane passing through the axis (6) of the rotor, in front of the ejection fan (5) ; the space between this beam (21) and the periphery of said rotor corresponding more or less to the space between said periphery of the rotor and said fan.

11. A loosening and shredding device according to any one of claims 1 to 10, characterised in that the rotor (4) comprises, in addition to said smooth discs (15), cutting discs (12) whose periphery contains smooth parts between two teeth, which teeth are formed on the periphery and/or added in the form of sections.

12. A loosening and shredding device according to claim 11, characterised in that the cutting discs (12) comprise teeth (13) whose number ranges from 15 to 25 with 15 to 25 mm in height beyond the periphery of the disc, which teeth (13) only cover about half the said periphery, whereas the remnant is smooth and circular.

13. A loosening and shredding device according to claim 11, characterised in that the periphery of the cutting discs is smooth and contains 3 to 20 sections whose lead angle is negative, in the order of 45 to 80°.

14. A loosening and shredding device according to claim 11, characterised in that the rotor contains 3 to 12 cutting discs (12) arranged on planes perpendicular to the axis (6) of said rotor, evenly spaced, and contains knives, teeth or propulsion blades arranged radially, whose number ranges from 3 to 20, evenly distributed over the periphery of the drum between the discs.

15. A loosening and shredding device according to claim 14, characterised in that the blades include teeth whose height is contained between the outer envelope of the cutting discs and the diameter of the smooth discs (15).

16. A loosening and shredding device according to any one of claims 14 or 15, characterised in that the blades are tilted longitudinally with respect to the axis of the rotor (4), by an angle ranging from 0 to 30°, which blades are preferably arranged in helix on either sides of the middle radial plane of said rotor and the teeth of two successive blades, located between two discs, are offset with respect to each other, in order to sweep the maximum front surface of the bale.

17. A loosening and shredding device according to any one of claims 1 to 10, characterised in that the rotor comprises, in addition to the smooth discs, cutting discs (12) parallel to each other, but tilted with respect to the axis of said rotor, which discs have an elliptical peripheral contour and are contained in a cylindrical envelope centered around said axis (6).

18. A loosening and shredding device according to claim 17, characterised in that the tilted cutting discs overlap each other by a value in the order of 15 to 25 mm.

19. A loosening and shredding device according to any one of claims 1 to 18, characterised in that it includes, above the upper section of the teeth of the first row (16), a baffle (22) which channels the products retained by said teeth in order to recycle them, which baffle has the shape of a metal sheet or of a canopy made of a cloth (23) stretched over arches (24).

## Patentansprüche

1. Vorrichtung zum Häckseln und Zerreißen von Futtermitteln, die in Ballen verpackt sind, bestehendeinerseits aus mindestens einem Rotor (4), der mit Elementen (14) zum Zertrennen dieses Ballens und zum Befördern der Fragmente zu einem Auswurf- und Verteilungsventilator (5) versehen ist, und andererseits aus Elementen in Form einer Egge (16) oder einer Schranke mit Zähnen (17) versehenen, die den Ballen zurückhalten und/oder die Produkte rezyklisieren sollen, dadurch gekennzeichnet, daß der Rotor zusätzlich zu den Zertrennelementen mindestens eine Scheibe (15) umfaßt, die radial angeordnet ist und deren Peripherie (19) glatt ist und mit einem Zahn (17) der Egge oder Schranke zusammenwirkt, wobei dieser Zahn in derselben Ebene wie die Scheibe angeordnet ist, um - mit derselben eine Zurückhaltefront zu bilden, - die Erscheinungen des Verstopfens zu vermeiden, - die Produktpakete zu rezyklisieren.

2. Vorrichtung zum Häckseln und Zerreißen nach Anspruch 1, dadurch gekennzeichnet, daß der Rotor (4) Zertrennelemente in Form von Scheiben (12) und glatte Scheiben (15) umfaßt, wobei die glatten Scheiben einen Durchmesser aufweisen, der zwischen dem Durchmesser der Trommel, die den Rotor bildet, und dem Durchmesser der Zertrennscheiben liegt.

3. Vorrichtung zum Häckseln und Zerreißen nach einem der Ansprüche 1 oder 2, dadurch gekennzeichnet, daß sie mindestens zwei Reihen von Zähnen oder Schranken aufweist:
- eine erste Reihe (16), die mit der bzw. den glatten Scheiben (15) zusammenwirkt, die im Vorlaufbereich der Vertikalebene angeordnet sind, die durch die Achse (6) des Rotors (4) geht, der die Scheiben (15) trägt;
- eine zweite Reihe (26), die mit der Peripherie der Zertrennscheiben (12) zusammenwirkt, wobei diese zweite Reihe im Nachlaufbereich der Vertikalebene angeordnet ist.

4. Vorrichtung zum Häckseln und Zerreißen nach Anspruch 3, dadurch gekennzeichnet, daß die Zähne (17) der ersten Reihe (16), die mit den glatten Scheiben (15) zusammenwirken, eine im wesentlichen größere Dicke als die der Scheiben aufweisen und seitlich Messer oder Segmente (33) umfassen, die die glatten Scheiben einspannen.

5. Vorrichtung zum Häckseln und Zerreißen nach Anspruch 4, dadurch gekennzeichnet, daß die Zähne (17 und 27) jeder der Reihen (16 und 26) jeweils zueinander versetzt sind, da sie in Zickzack angeordnet sind.

6. Vorrichtung zum Häckseln und Zerreißen nach einem der Ansprüche 1 bis 5, dadurch gekennzeichnet, daß der Rotor (4) mehrere glatte Scheiben (15) umfaßt, deren Abstand 400 bis 650 mm beträgt, wobei die Scheiben symmetrisch zu der mittleren Radialebene des Rotors angeordnet sind.

7. Vorrichtung zum Häckseln und Zerreißen nach Anspruch 5, dadurch gekennzeichnet, daß die Spitze der Zähne (17) der ersten Reihe (16) im Vorlaufbereich der vertikalebene, die durch die Achse (6) des Rotors (4) geht, in einem Bereich angeordnet ist, der von dieser Ebene bis zu ungefähr 3/4 des Radius der glatten Scheibe (15) geht.

8. Vorrichtung zum Häckseln und Zerreißen nach Anspruch 4, dadurch gekennzeichnet, daß die Zähne (17) der ersten Reihe (16) eine Front bilden, die sich in der Höhe auf einem Abstand erstreckt, der im wesentlichen dem Durchmesser des Rotors (4) entspricht, wobei die Zähne, ausgehend von ihrer Spitze (18), einen ersten, nach oben und nach vorne, d.h. zum Eingang des Kippers hin geneigten Abschnitt umfassen, gefolgt von einem Abschnitt, der sich auf der Hälfte ihrer Höhe erstreckt und nach oben und nach hinten nach einem Winkel von ungefähr 10° geneigt ist.

9. Vorrichtung zum Häckseln und Zerreißen nach Anspruch 4, dadurch gekennzeichnet, daß die Spitzen (28) der Zähne (27) der zweiten Reihe (26), die im Nachlaufbereich der Vertikalebene, die durch die Achse (6) des Rotors (4) geht, angeordnet sind, sich in einem Abstand zu dieser Ebene befinden, der zwischen der Hälfte und 3/4 von dem Radius der Umhüllung (29) des Rotors liegt, wobei diese Zähne eine Vorderflache (30) aufweisen, die im wesentlichen zu der Vertikalebene parallel ist.

10. Vorrichtung zum Häckseln und Zerreißen nach einem der Ansprüche 4 bis 9, dadurch gekennzeichnet, daß die beiden Reihen (16 und 26) von Zähnen auf einem selben Träger (21) montiert sind, der quer im Nachlaufbereich der Vertikalebene, die durch die Achse (6) des Rotors geht, vor dem Auswurfventilator (5) angeordnet ist; wobei der Raum zwischen diesem Träger (21) und der Peripherie des Rotors im wesentlichen dem Raum zwischen der Peripherie des Rotors und dem Ventilator entspricht.

11. Vorrichtung zum Häckseln und Zerreißen nach einem der Ansprache 1 bis 10, dadurch gekennzeichnet, daß der Rotor (4) zusätzlich zu den glatten Scheiben (15) Zertrennscheiben (12) umfaßt, deren Peripherie glatte Abschnitte zwischen den Zähnen umfaßt, wobei die Zähne an der Peripherie ausgebildet und/oder in Form Von Segmenten aufgesetzt sind.

12. Vorrichtung zum Häckseln und Zerreißen nach Anspruch 11, dadurch gekennzeichnet, daß die Zertrennscheiben (12) Zähne (13) umfassen, deren Anzahl 15 bis 25 beträgt mit einer Höhe von 15 bis 25 mm über der Peripherie der Scheibe, wobei diese Zähne (13) nur ungefähr die Hälfte der Peripherie abdecken, wobei der Rest glatt und kreisförmig ist.

13. Vorrichtung zum Häckseln und Zerreißen nach Anspruch 11, dadurch gekennzeichnet, daß die Peripherie der Zertrennscheiben glatt ist und 3 bis 20 Segmente umfaßt, deren Eingriffswinkel negativ ungefähr 45 bis 80° beträgt.

14. Vorrichtung zum Häckseln und Zerreißen nach Anspruch 11, dadurch gekennzeichnet, daß der Rotor 3 bis 12 Zertrennscheiben (12) umfaßt, die in zu der Achse (6) des Rotors senkrechten Ebenen angeordnet sind und gleichmäßige Abstände zueinander aufweisen, und Messer, Zähne oder Antriebsplatten umfaßt, die radial angeordnet sind und deren Anzahl 3 bis 20 beträgt und die regelmäßig an der Peripherie der Trommel zwischen den Scheiben verteilt sind.

15. Vorrichtung zum Häckseln und Zerreißen nach Anspruch 14, dadurch gekennzeichnet, daß die Platten Zahne umfassen, deren Höhe zwischen der äußeren Umhüllung der Zertrennscheiben und dem Durchmesser der glatten Scheiben (15) enthalten ist.

16. Vorrichtung zum Häckseln und Zerreißen nach einem der Ansprüche 14 oder 15, dadurch gekennzeichnet, daß die Platten längs in bezug zu der Achse des Rotors (4) um einen Winkel zwischen 0 und 30° geneigt sind, wobei die Platten vorzugsweise wendelförmig auf beiden Seiten der mittleren Radialebene des Rotors angeordnet sind und die Zähne von zwei aufeinanderfolgenden Platten, die zwischen zwei Scheiben angeordnet sind, zueinander versetzt sind, so daß ein maximaler Teil der Vorderfläche des Ballens bearbeitet wird.

17. Vorrichtung zum Häckseln und Zerreißen nach einem der Ansprüche 1 bis 10, dadurch gekennzeichnet, daß der Rotor zusätzlich zu den glatten Scheiben Zertrennscheiben (12) umfaßt, die zueinander parallel, jedoch in bezug zu der Achse des Rotors geneigt sind, wobei diese Scheiben eine elliptische Peripheriekontur aufweisen und in einer zylindrischen Umhüllung enthalten sind, die auf der Achse (6) zentriert ist.

18. Vorrichtung zum Häckseln und Zerreißen nach Anspruch 17, dadurch gekennzeichnet, daß sich die geneigten Zertrennscheiben um einen Wert von ungefähr 15 bis 25 mm überlappen.

19. Vorrichtung zum Häckseln und Zerreißen nach einem der Ansprüche 1 bis 18, dadurch gekennzeichnet, daß sie über dem oberen Teil der Zähne der ersten Reihe (16) eine Ablenkplatte (22) umfaßt, die die von den Zähnen zurückgehaltenen Produkte ablenkt, um sie zu rezyklisieren, wobei diese Ablenkplatte die Form eines Blechs oder eines Verdecks aufweist, das von einem Leinen (23) gebildet wird, das auf Bögen (24) gespannt ist.
